Europäisches Patentamt

European Patent Office

Office européen des brevets

(19)

(11) Veröffentlichungsnummer: **0 290 970 B1**

(12) **EUROPÄISCHE PATENTSCHRIFT**

(45) Veröffentlichungstag der Patentschrift: 04.09.91

(51) Int. Cl.⁵: **B01D 53/22**, B01D 53/04, C01B 13/02

(21) Anmeldenummer: 88107265.6

(22) Anmeldetag: 06.05.88

(54) **Vorrichtung zur Zerlegung und Anreicherung eines mehrkomponentigen Gases mit Hilfe mehrerer Trennkammern.**

(30) Priorität: 09.05.87 DE 3715555

(43) Veröffentlichungstag der Anmeldung:
17.11.88 Patentblatt 88/46

(45) Bekanntmachung des Hinweises auf die Patenterteilung:
04.09.91 Patentblatt 91/36

(84) Benannte Vertragsstaaten:
**DE FR GB**

(56) Entgegenhaltungen:
EP-A- 0 021 756     EP-A- 0 092 969
EP-A- 0 209 970     EP-A- 0 241 313
EP-A- 0 266 884     US-A- 4 701 187

PATENT ABSTRACTS OF JAPAN, Band 7, Nr. 268 (C-197)(1413), 30. November 1983, & JP - A - 58 151 304 (NIHON SANSO K.K.) 08.09.1983

(73) Patentinhaber: **Drägerwerk Aktiengesellschaft Moislinger Allee 53-55 W-2400 Lübeck 1(DE)**

(72) Erfinder: **Gerdts, Uwe, Dr. Seekenkamp 7 W-2418 Ratzeburg(DE)**

**Beschreibung**

Die Erfindung betrifft eine Vorrichtung zur Zerlegung eines mehrkomponentigen Gases, insbesondere von Luft, und dessen Anreicherung mit mindestens einer Komponente, bei der eine Versorgungsgasleitung eine Gasquelle mit einer Vortrennkammer verbindet, welcher ein an einer Komponente des Gases angereichertes Produktgas über eine Produktgasleitung entnehmbar und von welcher das an der entsprechenden Komponente verarmte Abgas über eine Abzweigleitung einer nachgeschalteten Zusatztrennkammer zuführbar ist, der ein Zusatzproduktgas über eine Zusatzproduktgasleitung entnehmbar ist.

Eine derartige Vorrichtung ist aus der EP-A 92 969 bekanntgeworden.

Die bekannte Vorrichtung dient zur Erzeugung eines hochreinen Gases, im bekannten Falle von Wasserstoff, das von seinen unerwünschten Verunreinigungen befreit werden soll. Dazu wird das Versorgungsgas einer als Permeationskammer ausgebildeten Vortrennkammer zugeführt, welche mit einer für Wasserstoff durchlässigen Permationsmembran ausgestattet ist. Das zugeführte verunreinigte Gas tritt in die Retentatkammer ein. Von dort gelangt hauptsächlich der Wasserstoffanteil über die Membran in die Permeatkammer, so daß das Gas von dem größten Teil der Verunreinigungen befreit ist und der Wasserstoff in angereichertem Zustand vorliegt. Die in der Retentatkammer zurückgebliebenen Verunreinigungsprodukte werden über eine Produktgasleitung einer weiteren Verwendung zugeführt. Der so vorgereinigte Wasserstoff wird aus der Permeatkammer über eine Abzweigleitung einem Druckwechseladsorptionsbett als Zusatztrennkammer zugeführt, in welchem das Abgas aus der Permeationskammer von den restlichen Verunreinigungen befreit wird.

Bei der bekannten Vorrichtung ist es von Nachteil, daß durch die Hintereinanderschaltung von zunächst der Permeationskammer und nachfolgend dem Druckwechseladsorptionsbett an der gleichen Versorgungsgasleitung sich die Druckverluste beider Trennkammern addieren. Dadurch ist der Druck in der Permeatkammer mindestens in einer solchen Höhe aufrechtzuerhalten, daß die nachfolgenden Druckwechseladsorptionsbetten wirkungsvoll betrieben werden können. Bei geringen Versorgungsgasdrücken, z. B. von 1,5 bis 5 bar, bleibt somit nicht mehr genügend Druckreserve für das Betreiben des Adsorptionsbettes übrig, legt man eine Druckreduktion zwischen Versorgungsgasleitung und Abzweigleitung der Permeationskammer um einen Faktor von etwa 2-5 zugrunde. Wollte man die bekannte Vorrichtung mit solch geringen Versorgungsgasdrücken speisen, müßte der Gasdruck vor Eintritt in die Druckwechseladsorptionsbetten auf einen entsprechenden Wert wieder erhöht werden. Dies könnte z. B. mit einem Kompressor geschehen, wodurch jedoch die Gesamtanlage aufwendiger, teurer und schwerer würde.

Der Wirkungsgrad der Permeationskammer hängt zudem nicht nur von dem Druckverhältnis zwischen der Retentatkammer und der Permeatkammer beiderseits der permeablen Membran, sondern mehr noch von dem Partialdruck-Verhältnis der anzureichernden Komponente beidseitig der Membran ab. Bei der bekannten Vorrichtung ist dieses Partialdruckverhältnis nicht einstellbar, sondern ergibt sich aus den während des Betriebs vorherrschenden Druck- und Konzentrationsverhältnissen in der Permeationskammer.

Der vorliegenden Erfindung liegt somit die Aufgabe zugrunde, eine Vorrichtung der genannten Art derart zu verbessern, daß insbesondere bei ihrem Betrieb mit geringen Versorgungsgasdrücken eine jede der Trennkammern in dem für eine wirkungsvolle Trennung günstigen Druckbereich betrieben werden kann. Die Auslegung der Trennkammern soll nach dem Lieferbedarf der einzelnen Komponenten ausgerichtet sein. Gleichzeitig soll der Wirkungsgrad der Permeationskammer erhöht werden.

Die Lösung der Aufgabe erfolgt mit den kennzeichnenden Merkmalen des Anspruchs 1.

Der Vorteil der Erfindung liegt im wesentlichen darin, daß der Betriebsdruck für beide Trennkammern, unbeeinflußt von ihrer gegenseitigen Beschaltung, sowohl an der Versorgungsgasleitung der Vortrennkammer als auch an der Speiseleitung der Permeationskammer anliegt.

Die Lieferleistung der Vortrennkammer sowie der Permeationskammer sind nicht unmittelbar miteinander verknüpft, weil sie nicht hintereinandergeschaltet, sondern beide an eine gemeinsame Gasquelle angeschlossen sind. Somit kann die Leistungsgröße beider Trennkammern auf den erforderlichen, auch unterschiedlichen, Bedarf an den einzelnen Komponenten ausgelegt sein.

Ein weiterer Vorteil ergibt sich daraus, daß die Permeatkammer der Permeationskammer mit dem an einer Komponente des Versorgungsgases verarmten Abgas gespült werden kann. Dadurch wird das Partialdruckverhältnis beiderseits der permeablen Membran in der Permeationskammer zugunsten einer Komponente des zu zerlegenden Gases verschoben und der Wirkungsgrad der Permeationskammer erhöht.

Für manche Gasarten liefert die Anwendung eines Adsorptionsbettes eine besonders hohe Reinheit des Produktgases.

Die Vorrichtung erweist sich insbesondere dann als vorteilhaft, wenn zur Trennung von Luft in ihre Bestandteile Stickstoff und Sauerstoff das Versorgungsgas zugleich in ein Adsorptionsbett zur Anreicherung von Sauerstoff und in eine Permeationskammer zur Anreicherung von Stickstoff geleitet wird. Dabei ist das Adsorptionsbett zweckmäßigerweise mit einem Zeolith gefüllt und die Permeationskammer mit einer für Sauerstoff permeablen Membran versehen. Das Adsorptionsbett liefert als Produktgas sauerstoffangereicherte Luft und die Retentatkammer stickstoffangereicherte Luft. Ist das Druckwechseladsorptionsbett in einer Ausführung mit nur einem Adsorptionsbett vorgesehen, wird während der Regenerationsphase der desorbierende Stickstoff als Abgas über die Abzweigleitung der Permeatkammer zugeführt, so daß bei ständiger Zuführung des Versorgungsgases in die Retentatkammer der Permeationskammer der Sauerstoffpartialdruck durch die vermehrte Anwesenheit des Stickstoffs in der Permeatkammer gesenkt und so die Permeation von Sauerstoff durch die sauerstoffdurchlässige Membran begünstigt wird. Bei einer Ausbildung des Druckwechseladsorptionsbettes mit zwei abwechselnd schaltbaren Adsorptionsbetten, von denen das eine mit dem Produktgas des anderen Bettes regeneriert wird, kann die Spülung der Permeatkammer der Permeationskammer kontinuierlich erfolgen. Man erhält dann eine Vorrichtung zur Zerlegung von Luft, welche ständig sauerstoff- und stickstoffangereicherte Produktgase liefert. Dabei wird das Abgas, welches bei der Regeneration des Druckwechseladsorptionsbettes anfällt, sinnvoll weiterverwendet und nicht einfach an die Umgebung abgeführt.

Zur Sicherung einer kontinuierlichen Spülung der Permeatkammer, insbesondere bei Verwendung eines einstufigen Adsorptionsbettes, kann in der Abzweigleitung ein Pufferbehälter vorgesehen sein, in welchem sich eine geeignete Menge von Abgas ansammeln kann, um einen kontinuierlichen Betrieb zu gewährleisten.

Zur besseren getrennten Einstellung der Versorgungsgasdrücke kann vorgesehen sein, daß in der Versorgungsgasleitung und/oder der Speiseleitung ein einstellbares Drosselelement eingebaut ist. Mit diesem Hilfsmittel ist es möglich, insbesondere bei der Permeationskammer die für einen guten Wirkungsgrad günstigen Druckverhältnisse beidseits der permeablen Membran einzustellen.

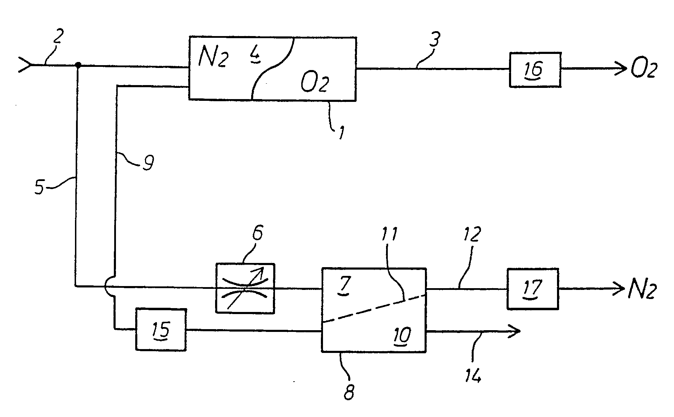

Ein Ausführungsbeispiel der Erfindung wird anhand der schematischen Zeichnung dargestellt und im folgenden näher erläutert. Die einzige Figur zeigt in Form eines Blockschaltbildes ein einstufiges Druckwechseladsorptionsbett (1), welches mit einer Versorgungsgasleitung (2) an eine nicht dargestellte Gasversorgung mit Luft angeschlossen ist. Eine Produktgasleitung (3) liefert an einen ebenfalls nicht dargestellten Verbraucher sauerstoffangereicherte Luft. Die zur Sauerstoffanreicherung notwendige Zeolithfüllung (4) ist zum Teil mit Stickstoff ($N_2$) belegt und liefert an ihrem der Produktgasleitung (3) zugewandten Ende angereicherten Sauerstoff. Von der Versorgungsleitung (2) führt eine Speiseleitung (5) über ein einstellbares Drosselelement (6) in die Retentatkammer (7) einer Permeationskammer (8). Über eine Abzweigleitung (9) mit einem Pufferbehälter (15) ist das Adsorptionsbett (1) mit der Permeatkammer (10) verbunden. Die als Zusatztrennkammer ausgebildete Permeationskammer (8) besitzt eine für Sauerstoff permeable Membran (11), so daß aus einer Zusatzproduktgasleitung (12) an der Retentatkammer (7) ein mit Stickstoff angereichertes Zusatzproduktgas entnehmbar ist. Eine Ausblaseleitung (14) verbindet die Permeatkammer (10) mit der Umgebung.

In der dargestellten Form sei der Betrieb der Vorrichtung während der Adsorptionsphase des Adsorptionsbettes (1) angenommen, so daß in der Zeolithfüllung (4) Stickstoff adsorbiert und aus der Produktgasleitung sauerstoffangereichertes Produktgas über einen Pufferbehälter (16) zum nicht dargestellten Verbraucher geführt wird. Gleichzeitig wird das Versorgungsgas über die Speiseleitung (5) der Retentatkammer (7) zugeführt, aus der der Sauerstoffanteil durch die permeable Membran (11) in die Permeatkammer (10) übertritt und über die Ausblaseleitung (14) der Umgebung zugeführt wird. Aus der Zusatzproduktgasleitung (12) ist stickstoffangereicherte Luft über einen Pufferbehälter (17) einem weiteren, ebenfalls nicht darstellten Verbraucher zuführbar. Während der Regenerationsphase des Adsorptionsbettes (1) wird der Stickstoff aus der Zeolithfüllung (4) desorbiert und über die Abzweigleitung (9) in die Permeatkammer (10) geleitet, so daß die Differenz des Sauerstoffpartialdruckes über der Membran (11) vergrößert und eine Permeation des Sauerstoffs begünstigt wird.

**Patentansprüche**

1. Vorrichtung zur Zerlegung eines mehrkomponentigen Gases, insbesondere von Luft, und dessen Anreicherung mit mindestens einer Komponente, bei der eine Versorgungsgasleitung (2) eine Gasquelle mit einer Vortrennkammer (1) verbindet, welcher ein an einer Komponente des Gases angereichertes Produktgas über eine Produktgasleitung (3) entnehmbar und von welcher das an der entsprechenden Komponente verarmte Abgas über eine Abzweigleitung (9) einer nachgeschalteten Zusatztrennkammer (8) zuführbar ist, der ein Zusatzproduktgas über eine Zusatzproduktgasleitung (12) entnehmbar ist, dadurch gekennzeichnet, daß aus der Vortrennkammer (1) das an der ersten Komponente verarmte Abgas über die Abzweigleitung (9) der Permeatkammer (10) der als Permeationskammer (8) ausgebildeten Zusatztrennkammer zuführbar ist, deren Retentatkammer (7) mit einer Speiseleitung (5) an die Gasquelle angeschlossen ist.

2. Vorrichtung nach Anspruch 1, dadurch gekennzeichnet, daß die Vortrennkammer ein Druckwechseladsorptionsbett (1) ist.

3. Vorrichtung nach Anspruch 2, dadurch gekennzeichnet, daß das Adsorptionsbett (1) zur Anreicherung von Luft mit Sauerstoff und die Permeationskammer (8) zur Anreicherung von Luft mit Stickstoff ausgebildet sind.

4. Vorrichtung nach Anspruch 3, dadurch gekennzeichnet, daß das Adsorptionsbett (1) mit einem Zeolith (4) gefüllt und die Permeationskammer (8) mit einer für Sauerstoff permeablen Membran (11) versehen sind.

5. Vorrichtung nach einem der Ansprüche 1 bis 4, dadurch gekennzeichnet, daß die Abzweigleitung (9) mit einem Pufferbehälter (15) versehen ist.

6. Vorrichtung nach einem der Ansprüche 1 bis 5, dadurch gekennzeichnet, daß mindestens in der Versorgungsgasleitung (2) und/oder der Speiseleitung (5) ein einstellbares Drosselelement (6) vorgesehen ist.

## Claims

1. A device for splitting a multicomponent gas, in particular air, and its enrichment with at least one component, in which a supply gas line (2) connects a gas source to a pre-separation chamber (1), from which there is able to be removed a product gas enriched with one component of the gas, by way of a product gas line (3), and from which the exhaust gas, impoverished of the corresponding component, is able to be supplied by way of a branch line (9), to a downstream additional separation chamber (8), from which there is able to be removed an additional product gas by way of an additional product gas line (12), characterised in that from the pre-separation chamber (1) the exhaust gas, impoverished of the first component, is supplied by way of the branch line (9) of the permeate chamber (10) to the additional separation chamber formed as permeation chamber (8), the retention chamber (7) of which is able to be connected, with a feed line (5), to the gas source.

2. A device according to claim 1, characterised in that the pre-separation chamber is a pressure-change adsorption bed (1).

3. A device according to claim 2, characterised in that the adsorption bed (1) is formed for enrichment of air with oxygen and the permeation chamber (8) for enrichment of air with nitrogen.

4. A device according to claim 3, characterised in that the adsorption bed (1) is filled with a zeolite (4) and the permeation chamber (8) is provided with a membrane (11) permeable to oxygen.

5. A device according to claims 1 to 4, characterised in that the branch line (9) is provided with a buffer container (15).

6. A device according to one of claims 1 to 5, characterised in that at least in the supply gas line (2) and/or the feed line (5) there is provided an adjustable throttle element (6).

## Revendications

1. Dispositif de décomposition d'un gaz à plusieurs composants, notamment de l'air, et d'enrichissement avec au moins un composant, dans lequel un conduit d'arrivée de gaz (2) relie une source de gaz à une chambre de séparation préliminaire (1) de laquelle un gaz produit, enrichi en un composant du gaz, peut être prélevé par un conduit de gaz produit (3) et à partir de laquelle le gaz sortant, appauvri en ce même composant, peut être amené, par un conduit de dérivation (9), vers une chambre de séparation supplémentaire (8) montée en aval, de laquelle un gaz produit supplémentaire peut être prélevé, par un conduit de gaz produit supplémentaire (12), caractérisé en ce qu'à partir de la chambre de séparation préliminaire (1), le gaz sortant, appauvri dans le premier composant, peut être amené, par le conduit de dérivation (9), au compartiment de perméation (10) de la chambre de séparation supplémentaire, configurée en chambre de transfert (8), dont la chambre de rétention (7) est raccordée à la source de gaz, par un conduit d'alimentation (5).

2. Dispositif selon la revendication 1, caractérisé en ce que la chambre de séparation préliminaire est une couche d'adsorption à variation de pression (1).

3. Dispositif selon la revendication 2, caractérisé en ce que la couche d'adsorption (1) est conçue pour enrichir l'air en oxygène et la chambre de transfert (8) pour enrichir l'air en azote.

4. Dispositif selon la revendication 3, caractérisé en ce que la couche d'adsorption (1) est garnie d'une zéolite (4) et la chambre de transfert (8) est pourvue d'une membrane (11) perméable à l'oxygène.

5. Dispositif selon l'une des revendications 1 à 4, caractérisé en ce que le conduit de dérivation (9) est pourvu d'un réservoir-tampon (15).

6. Dispositif selon l'une des revendications 1 à 5, caractérisé en ce qu'il est prévu un élément d'étranglement réglable au moins dans le conduit d'arrivée de gaz (2) et/ou dans le conduit d'alimentation (5).